(19) Europäisches Patentamt
European Patent Office
Office européen des brevets

(11) **EP 2 149 837 A1**

(12) **EUROPEAN PATENT APPLICATION**

(43) Date of publication:
**03.02.2010 Bulletin 2010/05**

(51) Int Cl.:
*G06F 3/023* (2006.01)  *G06F 3/048* (2006.01)
*H04M 1/22* (2006.01)

(21) Application number: **09166763.4**

(22) Date of filing: **29.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.07.2008  IN CH18282008**

(71) Applicant: **SAMSUNG ELECTRONICS CO., LTD.**
**Suwon-si**
**Gyeonggi-do 442-742 (KR)**

(72) Inventors:
- **Sristava, Alok**
  **560093, Bangalore (IN)**
- **Ranjan, Amitabh**
  **560093, Bangalore (IN)**

- **Yadav, Anand Prakash**
  **560093, Bangalore (IN)**
- **Kumar, Jayanth Kumar Jaya**
  **560093, Bangalore (IN)**
- **Bharadwaj, Malur Nagendra Srivatsa**
  **560093, Bangalore (IN)**
- **Ramesh, Sushanth Bangalore**
  **560093, Bangalore (IN)**
- **Pangti, Tarun**
  **560093, Bangalore (IN)**
- **Negi, Vaibhav**
  **560093, Bangalore (IN)**

(74) Representative: **Boakes, Jason Carrington**
**Harrison Goddard Foote**
**106 Micklegate**
**York, Yorkshire YO1 6JX (GB)**

(54) **Method and system for emphasizing objects**

(57) Method and system for emphasizing objects is disclosed. The method includes receiving input characters from a user of the electronic device and predicting one or more characters based on the input characters. Moreover, the method includes calculating a distance of each predicted character from a last input character. The method also includes calculating an emphasizing priority of each predicted character based on priority of each predicted character and the distance of each predicted character from the last input character. The method further includes emphasizing the predicted characters based on the emphasizing priority of the predicted characters.

FIG.3

**EP 2 149 837 A1**

**Description**

**BACKGROUND OF THE INVENTION**

1. Field of the Invention

The present invention relates to electronic devices. More particularly, the present invention relates to a method and system for emphasizing objects in an electronic device.

2. Background to the Invention

Small electronic devices are becoming increasingly popular these days. These electronic devices are bundled with various functions that help a user to perform various tasks. In addition, these electronic devices also entertain users by playing music, playing videos, and the like. These electronic devices also enables users to access and exchange information. A user needs to provide input to the electronic device to access functions available in the electronic device. In addition, while using the electronic device for exchanging information, for example sending messages, text input needs to be provided by the user.

Input to an electronic device can be provided by using a hardware keypad or software/virtual keypad (together referred to as a keypad). In one example, a user presses various keys of a keypad to type a word. After pressing one key the user searches for next key to be pressed. This is a time consuming exercise and results in a delay in typing. In another example, the user types a word in a mobile device using a reduced keypad. In addition, the user has to shift focus from the keypad to the screen and vice versa to avoid any mistake. The time spent in shifting focus leads to time inefficiency. Further, convenience of the user is affected.

In a scenario when a user is trying to access information, various objects can be presented to the user. Some examples of such a scenario include web browsing, menu browsing, and the like. The volume of objects presented to the user is typically huge and the user might get confused in selecting objects. Further, the time spent by the user in selecting the objects of interest is also high. Moreover, the user's convenience is affected.

**SUMMARY OF THE INVENTION**

It is an aim of certain embodiments of the invention to solve, mitigate or obviate, at least partly, at least one of the problems and/or disadvantages associated with the prior art. Certain embodiments aim to provide at least one of the advantages described below.

In light of the above, it is desirable to provide character and/or objects that are of interest to a user in manner that these characters and/or objects are easily accessible to the user.

In an embodiment, a method for emphasizing characters in an electronic device is provided. The method includes receiving input characters from a user of the electronic device. The method also includes predicting one or more characters based on the input characters. Moreover, the method includes calculating a distance of each predicted character (of the one or more predicted characters) from a last input character (of the input characters). The method also includes calculating an emphasizing priority of the each predicted character based on a priority of each predicted character and the distance of each predicted character from the last input character. The method further includes emphasizing the predicted characters based on the emphasizing priority of the predicted characters.

In another embodiment, a method for emphasizing objects in an electronic device is provided. The method includes receiving input from a user of the electronic device to select objects. The method also includes assigning priority to objects based on one or more parameters. The method also includes reordering priority of the objects based on a distance of the objects from a last object selected by the user. Moreover, the method includes emphasizing the objects based on the reordered priority.

In another embodiment, an electronic device is provided. The electronic device includes an input module, a prediction engine and a processor. The input module is adapted to receive input characters from a user of the electronic device. The prediction engine is adapted to predict one or more characters based on the input characters. The processor is adapted to calculate a distance of each predicted character (of one or more predicted character) from a last input character (of the input characters). The processor is also adapted to calculate an emphasizing priority of the each predicted character based on a priority of each predicted character and the distance of the each predicted character from the last input character. Further, the processor is adapted to emphasize the predicted characters based on the emphasizing priority of the predicted characters.

The above and other features, aspects, and advantages of the present invention will be more apparent from the following detailed description when taken in conjunction with the accompanying drawings.

## BRIEF DESCRIPTION OF THE DRAWINGS

Features and advantages of the present invention will become more apparent from the following detailed description of the invention taken in conjunction with the accompanying figures, in which:

FIG. 1 is an illustration of an electronic device in which present invention can be practiced, in accordance with an embodiment of the present invention:
FIG. 2 is block diagram of an electronic device in accordance with another embodiment of the present invention;
FIG. 3 is flow diagram depicting a method for emphasizing characters in an electronic device, in accordance with an embodiment of the present invention;
FIG. 4 is a flow diagram illustrating a method for emphasizing objects in accordance with an embodiment of the present invention;
FIGS. 5A, 5B, 5C, 5D and 5E are illustrations of emphasizing objects in a mobile device in accordance with an embodiment.
FIGS. 6A, 6B, 6C and 6D are illustrations emphasizing objects in accordance with another embodiment of the present invention; and
FIG. 7 is an illustration emphasizing objects, in accordance with an embodiment of the present invention.

## DESCRIPTION OF EMBODIMENTS OF THE INVENTION

Persons skilled in the art will appreciate that elements in the figures are illustrated for simplicity and clarity and may have not been drawn to scale. For example, dimensions of some of the elements in the figures may be exaggerated relative to other elements to bring clarity and help to improve the understanding of the various embodiments of the present invention.

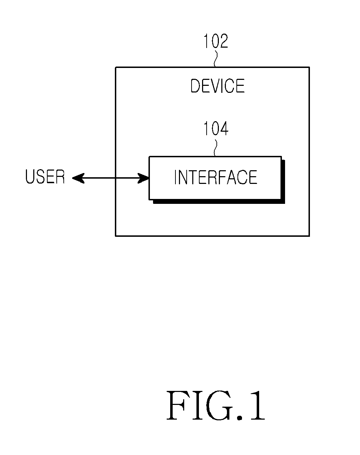

FIG. 1 is a an illustration of an electronic device 102 in which present invention can be practiced, in accordance with one embodiment. The electronic device 102 includes an interface 104. The interface 104, for example a display, is used to present objects to a user. The objects can be presented to a user by emphasizing the objects. In one embodiment, the objects, for example keys, may be included in the interface 104. The keys can be part of a hardware keypad or a software keypad. For example, in a mobile phone the interface may include a keypad, and keys on the keypad can be emphasized to make desired keys more appealing to the user.

In one embodiment, an object can include a visible or audible entity. Other examples of the objects include, but are not limited to, a textual element, a graphical element, a two dimensional element, a three dimensional element, a drawing, an image, a video element, an audio element, a multimedia element, a letter, alphabets, words, weblinks, characters, hyperlinks, keys, buttons, keypads, icons and any other entity that can be emphasized.

Examples of the electronic device 102 include, but are not limited to, computers, laptops, mobile devices, data processing units, hand held devices, and personal digital assistants.

Examples of the interface 104 include, but are not limited to, keypads, virtual keypads, on screen keypads, keyboards, touch screens, monitors, display devices, screens, speakers and any other entity through which a user can communicate with the electronic device 102 or the electronic device 102 can communicate with the user.

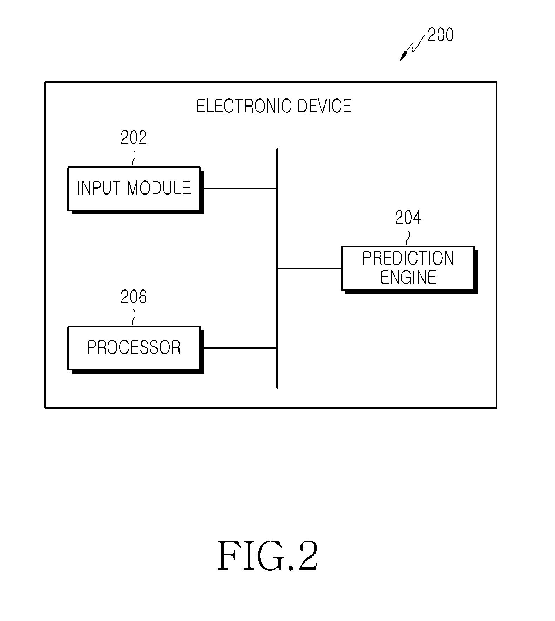

FIG. 2 is a block diagram of an electronic device 200, in accordance with another embodiment of the present invention. The electronic device 200 is capable of emphasizing objects. Examples of objects include characters, keys for providing input to the electronic device 200, and the like. For the sake of clarity, this embodiment is explained with the help of characters. Examples of the electronic device include, but are not limited to, mobile phones, laptops, personal computers, media players, and the like. The electronic device 200 includes an input module 202, a prediction engine 204, and a processor 206.

The input module 202 can receive input characters from a user of the electronic device 200. Examples of the input module 202 include, but are not limited to, a hardware keypad, a virtual keypad, and an on-screen keypad. The input received through the input module 202 is provided to the prediction engine 204. The prediction engine 204 predicts one or more characters, based on the input characters. The information related to predicted characters, for example, priority of the each predicted character, can be provided to the processor 206.

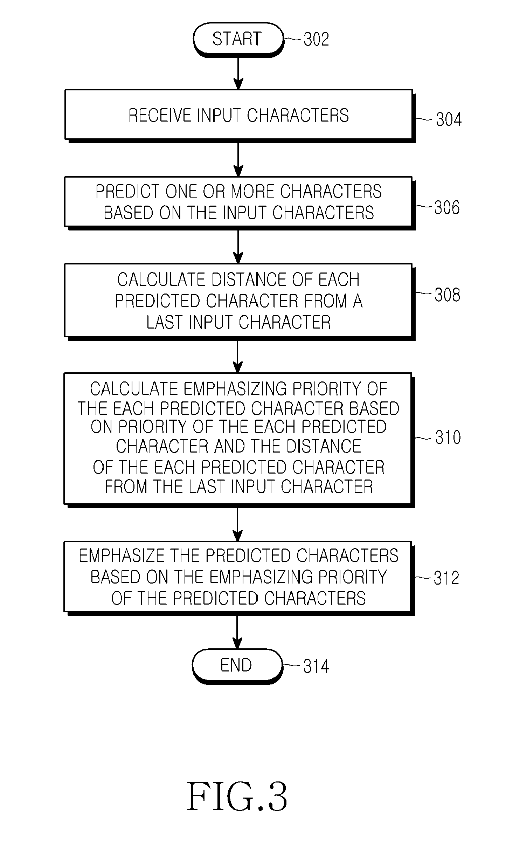

The processor 206 calculates the distance of each predicted character from a last input character. In addition, the processor 206 also calculates an emphasizing priority of each predicted character based on the priority of each predicted character and the distance of each predicted character from the last input character. Thereafter, the processor 206 emphasizes the predicted characters, based on the emphasizing priority of the predicted characters. A method for emphasizing the objects will be explained with reference to FIG. 3.

FIG. 3 is a flow diagram depicting a method for emphasizing character in an electronic device 200, in accordance with an embodiment of the present invention. Examples of the electronic device 200 include mobile phones, personal digital assistants, computers, and the like. The method for emphasizing characters is initiated at step 302 and terminated at step 314. At step 304, input characters are received by the electronic device 200 from a user of the electronic device 200. The input characters can be received by using input module 202 provided at the electronic device 200. For example, a user can type the input characters by using a keypad, a keyboard, a virtual keypad, or a software keypad/keyboard available on the electronic device 200.

After receiving the input characters, one or more characters are predicted by the prediction engine 204 provided at the electronic device 200, based on the characters input at step 306. The one or more characters can be predicted by using any known predicting technique. For example, if user has provided 'h' as input to the electronic device 200, subsequent characters that can be provided as input to the electronic device 200 are predicted. Suppose, words 'her', 'home', and 'hut' can be formed by using 'h', then 'e', 'o', and 'u' can be predicted by the electronic device 200 as next probable input characters after 'h'. Typically, a priority is associated with each of the predicted character. Priority of a predicted character can be based on frequency of usage of a word or words that can be formed by using the predicted character and last input character. For example, 'o' has highest priority, 'e' has second highest priority, and 'u' has the least priority, if 'home' is most frequently used and 'hut' least frequently used amongst 'home', 'her', and 'hut'. Similarly, priority can be assigned to various characters that are predicted by the electronic device 200. Persons of ordinary skill in the art will appreciate that there can be various other methods of assigning priority to predicted characters.

Thereafter, a distance of each predicted character from a last input character is calculated at step 308. In the above example, the last input character is 'h', as result, distance 'o', 'e' and 'u' is calculated from 'h'. Distance between a last character and a predicted character can be calculated as a physical distance between the last input character and the predicted character, minimum number of keys between a key containing a last input character and a key containing a predicted character, and the like.

Once the distance between the last character and the predicted characters is calculated, an emphasizing priority of each predicted character is calculated. The emphasizing priority of each predicted character is calculated based on the priority of each predicted character; and the distance of each predicted character from the last input character at step 310. In other words, the emphasizing priority of the predicted characters is a function of the priority of each predicted character and the distance of each predicted character from the last input character. It will be apparent to a person of ordinary skill in the art that various combinations of priority and the distance of the each predicted character from the last input character can be used to calculate a emphasizing priority. A few examples are provided below in Equations (1) and (2).

$$E(p_i) = C * D_i * P_i \qquad ….. (1)$$

$$E(p_i) = C * (P_i/D_i) \qquad …..(2)$$

where $E(p_i)$ is the emphasizing priority of the $i^{th}$ predicted character; C is a constant; $D_i$ is distance of the $i^{th}$ predicted character from the last input character; and $P_i$ is the priority of the $i^{th}$ predicted character.

The emphasizing priority can be used to emphasize the predicted character at step 312. As a result, each predicted character is emphasized differently. For the sake of clarity, the emphasizing priority based on Equation (1) and Equation (2) is explained with reference to Example 1 and Example 2 respectively.

To explain Example 1 and Example 2, priorities of 'e', 'o', and 'u' (after 'h' is provided as an input character) can be considered as 3, 2, and 5, respectively. In addition, distance of 'e' from 'h', distance of 'o' from 'h', and distance of 'u' from 'h' can be considered as 6 units, 3 units, and 2 units, respectively.

Accordingly, emphasizing priorities of 'e', 'o', and 'u' based on Example 1 (Equation (1)) can be calculated as follows (considering C = 1):

E(e) = 3*6 = 18 units;
E(o) = 2*3 = 6 units; and
E(u) = 5*2 = 10 units.

In light of the above, 'e' can be emphasized most (when compared to 'o' and 'u'), 'u' can be emphasized more than 'o', and 'o' can be emphasized least (when compared to 'u' and 'e').

Emphasizing priorities of 'e', 'o', and 'u' based on Example 2 (Equation (2)) can be calculated as follows (considering C = 1):

E(e) = 3/6 = 5 units;

E(o) = 2/3 = 0.66 units; and
E(u) = 5/2 = 2.5 units.

In light of the above, 'u' can be emphasized most (when compared to 'e' and 'o'), 'o' can be emphasized more than 'e', and 'e' can be emphasized least (when compared to 'o' and 'u').

In some embodiments, the emphasizing priority can be a function of distance of each predicted character from the last input character. In these embodiments, the following Equation 3 can be used to describe the emphasizing priority:

$$E(p_i) = C*D_i \qquad \qquad ..... (3)$$

where$e(p_i)$ is the emphasizing priority of the $i^{th}$ predicted character;C is a constant; and $D_i$ is distance of the $i^{th}$ predicted character from the last input character.

In light of the above equation, emphasizing priorities of 'e', 'o', and 'u' (based on Equation (3)) can be calculated as follows (considering C = 1):

E(e) = 6 units;
E(o) = 3units; and
E(u) = 2units.

In light of the above, 'e' can be emphasized most (when compared to 'o' and 'u'), 'o' can be emphasized more than 'u', and 'u' can be emphasized least (when compared to 'o' and 'e').

The predicted words can be emphasized by using various techniques. Some of these techniques are explained below.

Technique 1

In this technique, the predicted characters can be emphasized by highlighting the predicted characters in different colors. For example, a character with the highest emphasizing priority can be highlighted by using the brightest color amongst colors used for emphasizing the predicted characters and a character with the lowest emphasizing priority can be highlighted by using the dullest color amongst colors used for emphasizing the predicted characters. Accordingly, other predicted characters can be emphasized by using colors, based on the emphasizing priority.

Technique 2

In this technique, the predicted characters can be emphasized by modifying touch sensitivity of an area depicting the predicted characters, based on the emphasizing priority. For example, a predicted character with the highest emphasizing priority can be made most sensitive to touch amongst the areas used for depicting the predicted characters, and a predicted character with the lowest emphasizing priority can be made least sensitive to touch amongst the areas used for depicting the predicted characters. Accordingly, other predicted characters can be emphasized by modifying the touch sensitivity of the area depicting these characters, based on the emphasizing priority.

Technique 3

In this technique, the predicted characters can be emphasized by modifying the size of the predicted characters, based on the emphasizing priority. For example, the size of a predicted character with the highest emphasizing priority is the largest amongst the sizes of the predicted characters, and the size of a predicted character with the lowest emphasizing priority is the smallest amongst the sizes of the predicted characters. Accordingly, other predicted characters can be emphasized by using different font sizes, based on the emphasizing priority.

Technique 4

In this technique, the predicted characters can be emphasized by displaying the predicted characters in the proximity of the last input character, based on the emphasizing priority of the predicted characters. For example, a predicted character with the highest emphasizing priority can be displayed closest in proximity to the last input character as compared to the other predicted characters, and a predicted character with the lowest emphasizing priority can be displayed farthest from the last input character as compared to the other predicted characters. Accordingly, other predicted characters can be emphasized by displaying these characters in proximity to the last input character, based on the emphasizing priority.

Technique 5

In this technique, the predicted characters can be emphasized by displaying the predicted characters with different fonts, based on the emphasizing priority. For example, a predicted character with the highest emphasizing priority can be displayed by using the largest font size amongst the font sizes used for displaying the predicted characters, and a predicted character with the lowest emphasizing priority can be displayed by using the smallest font size amongst font sizes used for displaying the predicted characters. Accordingly, other predicted characters can be emphasized by using different font sizes, based on the emphasizing priority.

Technique 6

In this technique, the predicted characters can be emphasized by highlighting the predicted characters by using different backlight colors. For example, a character with the highest emphasizing priority can be highlighted by using the brightest backlight color amongst the backlight colors used for emphasizing the predicted characters, and a character with the lowest emphasizing priority can be highlighted by using the dullest backlight color amongst the colors used for emphasizing the predicted characters. Accordingly, other predicted characters can be emphasized by using different backlight colors, based on the emphasizing priority.

Technique 7

In this technique, the predicted characters can be emphasized by modifying the layout of a virtual keypad to display predicted characters only. For example, if 'h', 'l', 'e', and 'o' are predicted after 'a' is provided as the last input character, then only 'h', 'l', 'e', and 'o' are displayed in the virtual keypad. The predicted characters can be further emphasized by using any of the techniques explained above. In another example, the layout of the virtual keypad can be modified to only enable the predicted characters. In this example, all keys on the virtual keypad are visible, however, only characters that are enabled can be used to provide input. In this example also, the predicted characters can be further emphasized by using any of the techniques explained above.

Technique 8

In this technique, the predicted characters can be emphasized by providing animation that points to the predicted characters. For example, if 'h', 'l', 'e', and 'o' are predicted after 'a' is provided as the last input character, then pointers from 'a' (pointing towards 'h', 'l', 'e', and 'o') can be used to emphasize the predicted characters. In another example, an animation that depicts paths to the predicted characters, for example, with the help of arrows can be used to emphasize the predicted characters. The predicted characters can be further emphasized by using any of the techniques explained above.

Though the above techniques are explained independently, it will be apparent to a person of ordinary skill in the art that various possible combinations of the above mentioned techniques can be used to emphasizing the characters.

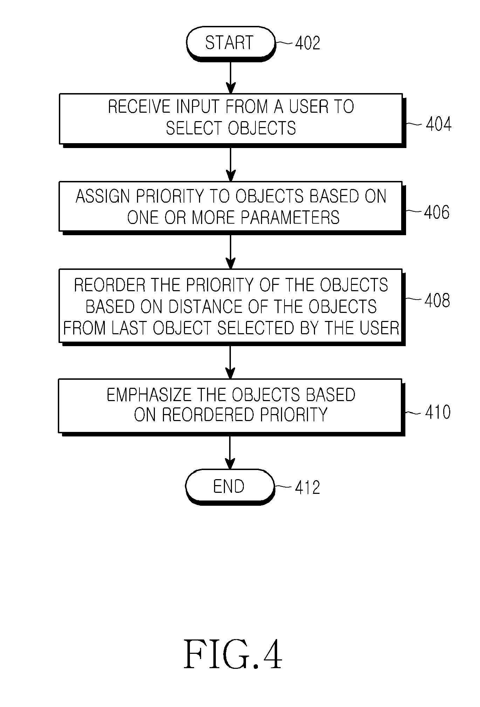

A method of emphasizing objects is explained with reference to FIG. 4.

FIG. 4 is a flow diagram illustrating a method for emphasizing objects in accordance with an embodiment of the present invention. Examples of objects include characters, textual elements, graphical elements, two dimensional elements, three dimensional elements, drawings, images, video elements, audio elements, multimedia elements, letters, alphabets, words, web links, characters, hyperlinks, keys, buttons, keypads, icons and any other entity that can be emphasized. The method for emphasizing objects is initiated at 402. At step 404, an input is received from a user of the electronic device 200 to select objects. At step 406, a priority is assigned to one or more objects based on one or more algorithms. The algorithms are based on one or more parameters. Examples of the parameters include but are not limited to a size, a shape, a color, a user experience and any other parameter based on which priorities can be assigned to the objects. In one embodiment, the priority is assigned to the objects based on a prediction algorithm. For example, in a mobile phone when a user wants to type a word and presses a key, then priorities may be assigned to a list of letters that are predicted to occur next by using the prediction algorithm.

It will be appreciated that various algorithms may be used for assigning priorities in different scenarios. Examples of the algorithms include, but are not limited to, a page ranking algorithm, a search algorithms, algorithms using pre-defined rules for prioritizing, and algorithms requiring user inputs for prioritizing. In one embodiment, step 406 may be bypassed and a list of objects, prioritized based on the algorithms, may be received.

At step 408, the priority of each of the objects is reordered, based on the distance of the objects from the last object selected by the user. Table 1 illustrates an exemplary reordering of priority, based on the distance parameter.

Table 1

| | Small Distance | Large Distance |
|---|---|---|
| Low Priority | Priority 3 | Priority 4 |
| High Priority | Priority 1 | Priority 2 |

In one embodiment, Priority 1 is the highest priority allotted to an object which has a high priority in the list of objects and is at a small distance from a point corresponding to a last user activity. A small distance can be pre-defined or user defined. A small distance can be referred to as the minimum distance between the object and the point corresponding to the last user activity. The point corresponding to the last user activity can be a key which is pressed last by the user. The point corresponding to the last user activity can be a point where the cursor of the mouse was last present. It will be appreciated that the point corresponding to the last user activity can vary based on the interface, for example, an interface 104, used by the user.

Priority 4 is the lowest priority allotted to an object which has a low priority in the list of objects and is at a large distance from a point corresponding to the last user activity. A large distance can be pre-defined or user defined. A large distance can be referred to as the maximum distance between the object and the point corresponding to the last user activity.

Priority 2 is the priority allotted to an object which has a high priority in the list of objects and is at a large distance from a point corresponding to the last user activity. Priority 3 is the priority allotted to an object which has a low priority in the list of objects and is at a small distance from a point corresponding to the last user activity.

It will be appreciated that Table 1 shows the exemplary priority setting and the priority setting can be pre-defined or user defined. There can be more than two priority levels in the list of objects, for example medium priority level, low medium priority level and so forth. Also, there can be more than two distance levels. At step 410, the objects are emphasized based on the reordered priority. It will also be appreciated that the priority setting can include different contribution fractions of the distance parameter and the priority based on list of objects. The priority can be reordered, based on user inputs or pre-defined settings. Further, other factors can also be used in combination with the distance parameter. Examples of other factors include, but are not limited to, user preferences, previous activities of a user, user selection in previous similar situations and any other factor which is not considered in deciding the priority order in the list of objects.

The objects corresponding to Priority 1, Priority 2, Priority 3 and Priority 4 are then emphasized based on the priority settings. The object corresponding to Priority 1 is emphasized most followed by the other objects in the order of decreasing priority. Emphasizing may include, but is not limited to, highlighting, making the objects bold, changing size, animating, playing voice clips that enables the user to identify the predicted characters, changing appearance of the objects, flashing, blinking, and any other way of making the objects appealing to the user. For example, font size of the object of Priority 1 can be made larger than font size of the object of Priority 2. Similarly, objects with Priority 3 and Priority 4 can be emphasized. It will be appreciated by a person skilled in the art that various permutations and combinations of the distance and the priority can be used to emphasize an object. For example, emphasizing an object can be directly proportional to the priority of an object and inversely proportional to the distance of the object from the last character or object. In another example, emphasizing an object can be directly proportional to the priority of an object and directly proportional to the distance of the object from the last character or object. Similarly, other combinations can also be made based on the priority and the distance of an object from the last input character or object.

The method described above will be explained with reference to an example of mobile phones below.

In mobile phones the object can be a mobile keypad or virtual keypad or an on-screen keyboard. The user experience can be improved by using information about a key that was last used.

A map as shown in Table 1 can be made. The map describes the extent to which the different attributes of the key can change depending on the distance to the previously pressed key. The map lists the degree of change of the key. The first column lists whether the short listed key by the messaging solution is of a low or a high priority, the first row lists whether the distance between the predicted key and the short listed key, is small or large. For example, if a key that is short listed by the messaging solution is of a high priority and is at a small distance from the previously pressed key, then the degree of change of the key appearance and/or sensitivity of the key can be maximized. As a result, if the size of the keys is altered, then this key can get the maximum size from among the shortlist.

The map helps in highlighting keys that are predicted to occur next, and also in enhancing keys that are likely to be pressed by the user. Different parameters can be used to change the shape and the appearance of the keys. The parameters are described below.

The attributes of a key can be described in a structure as given below:

```
struct key
{
    int sensitivity;
    int color;
int size;
int font;
int distance_from_previous_key;
};
```

In the above structure, the first member of the structure, sensitivity, quantifies the tolerance of the key to a spurious input from the user. Therefore, if the key has a high sensitivity, it can be more responsive to user input, and less tolerant to spurious input. And, if the key has a low sensitivity, then the key can be less responsive, and can ignore the more spurious user input. The parameter distance_from _previous_key quantifies the physical distance of the current key from the previously pressed key. The structure can contain several more attributes, for example the size, shape, and color of the key. Basically, parameters that affect the appearance and behavior can be present in the structure, which can be manipulated.

A function, for example distance_between_keys (key_previous, key_shortlisted), can be defined. This function can return the physical distance between the keys passed as parameters. The keys that are passed as parameters include the key that was previously pressed and the key that was short-listed according to the predictive messaging solution.

The aspects of the keypad that can change during the usage include any change in the appearance and/or behavior of the keypad presented to the user. Examples of the change include, but are not limited to, differentiated coloring or other forms of highlighting of keys on the keypad, differentiated backlight of selected keys on hardware keypads, the increase or decrease of the size of keys in case of software or virtual keypad, the increase or decrease in the size of characters on the keys of the keypad, the increase or decrease in the sensitivity of a key of a software or virtual keypad, the addition or deletion of keys on the virtual keypad, the change in positions of keys on the keypad, the orientation of the keypad and an animation that is presented to the user that shows the sequence of keys that needs to be input by the user, by highlighting the sequence of keys to be used, with next key being highlighted when a timer runs out.

Based on the return value of the function distance_between_keys (key_previous, key_shortlisted), one or more attributes of the key are changed. A function that can be used for emphasizing this change includes:

```
Emphasize_key(key_shortlisted)
{
    int distance;
    distance = distance_between_keys(key_previous, key_shortlisted);
    case(distance)
    {
        X: key->size = const*x;
           key->color=0xnnn1;
break;
        X+1: key->size = const*(x+1);
            Key->color = 0xnn2;
              break;
        .
        .
    } encase;
};
```

The function described above takes a key that is short-listed by the predictive solution as a parameter. The function changes the different attributes of a key based on the distance from the previously pressed key.

A list of next possible characters is obtained from the predictive messaging solution. From among the list of characters obtained, the solution can also emphasize keys based on the distance of the short-listed key to the previously pressed key. A function, for example as the one given below, is defined, by the predictive messaging solution:

```
Key * Retum_pointer_to_shortlist(key Previous_pressed_key);
{
    Key *short_list;
Short_list = Prepare_shortlist(Previous_pressed_key,
```

```
Word_entered_so_far);

    Return short_list;
    }
```

The function, Retum_pointer_to_shortlist, takes the previously pressed key as the parameter. This function calls another function, Prepare_shortlist, that takes the previously pressed key and the word entered so far by the user, as the parameters. The other function returns a pointer to a shortlist of characters that are most likely to be entered by the user, sorted in the order of priority such that the most likely key to be entered is on top of the list.

Therefore, for every key in the shortlist, along with an attribute that quantifies priority, the key can have an attribute that quantifies the distance to the previously pressed key.

Languages with complex scripts (such as Hindi, Korean, or Chinese) can be easy to use or type with the methods described above as there can be several alphabets mapped to every key. With the use of the above method, many characters mapped to the keys can be eliminated with every key press. Hence, the method aids the user by reducing the number of possible keys that users have to pick from.

This emphasizing in the mobile keypad can be performed by controlling backlights of the keys and lighting individually. Also, the backlight for individual keys can be controlled according to words or letters predicted by a predictive messaging solution. In the case of a mobile telephone keypad, if the keypad supports individual key backlighting, then the mobile telephone can potentially save power, since the lights are backlit individually and not all lights are on at the same time. In the case of a Virtual or Software keypad, the letters displayed on screen, can be dynamically changed according to the words predicted. For example, after some keystrokes, if the predictive solution can completely eliminate some of the letters mapped to some keys, then those keys can be removed from the virtual keypad, retaining only those keys that have the possibility of occurring next. So the user is presented with a smaller set of keys for typing. This enhancement can be useful while typing languages where there can be several characters mapped to every key (eg non-English languages). Thereafter, the method can be terminated at step 412.

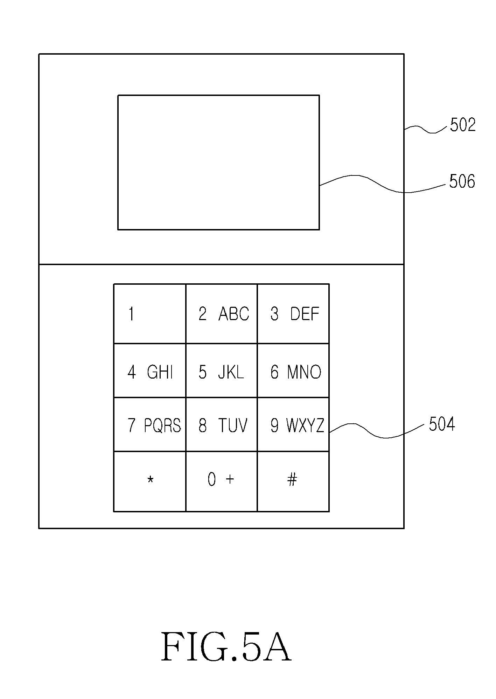

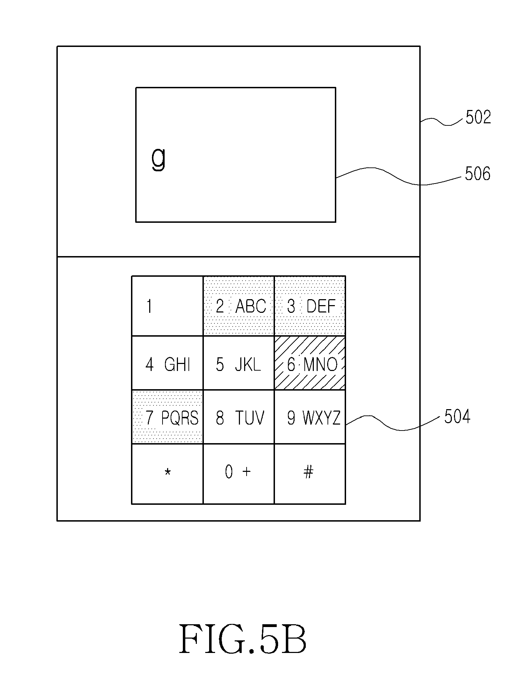

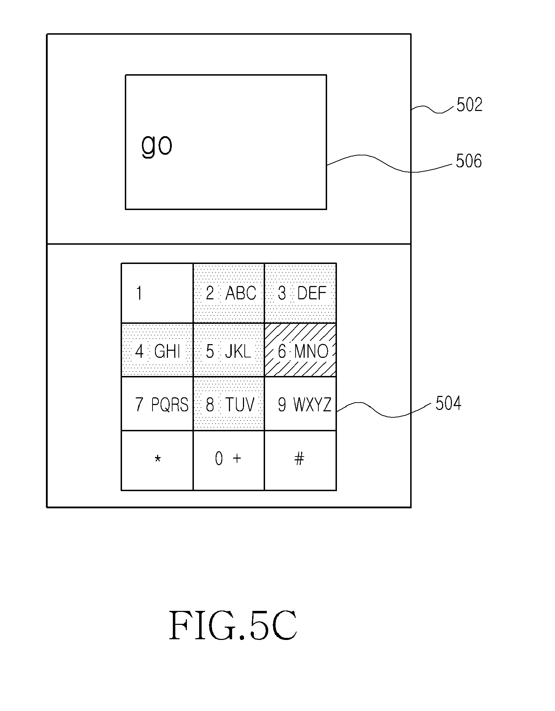

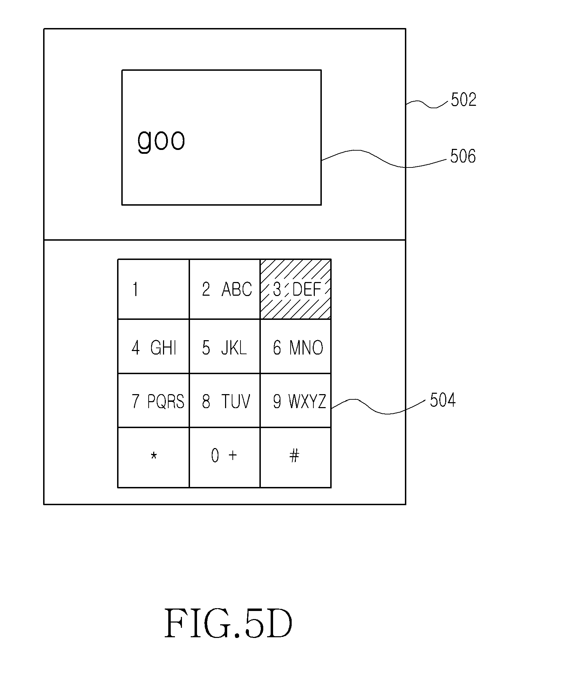

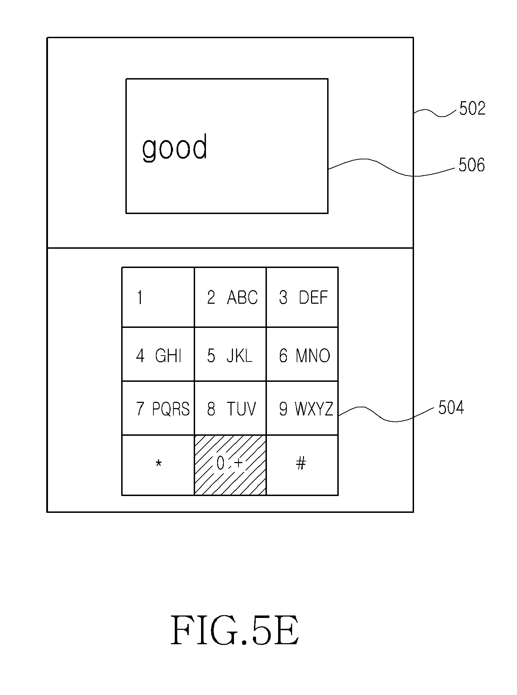

FIGS. 5A, 5B, 5C, 5D and 5E are illustrations emphasizing objects in a mobile device 502, in accordance with an embodiment of the present invention. The mobile device 502 can provide messaging service to a user. The mobile device 502 includes a hardware keypad 504 and a display area 506 capable of displaying text. The hardware keypad 504 illustrates the keys in the initial setup for messaging.

A user types a message by pressing a key on the hardware keypad 504, for example key 6 and the next possible keys which are predicted to be pressed next can be highlighted by using back light. The selection of the next possible keys can be done on the basis of the prediction and the distance between the predicted key and the previously typed key. The predicted keys are emphasized based on the distance parameter and various combinations of the distance and the priority can be used to emphasize a key.

It will be appreciated that the prediction can be done by using various prediction algorithms.

FIG. 5B is an illustration of the mobile device 502 when the first letter is pressed. Key 4 is pressed once, and the letter 'g' is displayed on the display area 506.

In one embodiment, the next set of possible letters that can follow the typed letter 'g' are predicted. The keys corresponding to the predicted letters can be emphasized by using back light. For example, 'gap', 'get', 'got', 'good', and 'great' can be formed by using 'g'. As a result, 'a', 'e', 'o', or 'r' can be predicted as a possible letter following 'g'. As a result, the keys containing these letters, 'a', 'e', 'o', or 'r', can be emphasized. Various techniques for emphasizing can be used to emphasize the key containing the predicted characters. For example, the keys 2, 3, 6 and 7 (containing the predicted characters) can be emphasized by using the backlight. The other keys that are not predicted in the sequence can be turned off (not highlighted by using the backlight). For example, the keys 1, 4, 5, 8, 9, 0, * and # are turned off. The most probable key, for example, key 6 is made brighter as compared to other back lighted keys. In one embodiment, a key closest to key 4 can be emphasized at a maximum, when compared to 2, 3, 6, and 7. In another embodiment, the key that is farthest from key 4 can be emphasized the most. In another embodiment, a normalized factor of the priority and the distance can be used to emphasize a key. In one embodiment, a key with the highest normalized priority can be emphasized the most. In another embodiment, a key with the minimum normalized priority can be emphasized the most. A normalized priority can be inversely or directly proportional to the distance of a letter from the last pressed key.

In the above example, key 6 has the highest normalized priority. As a result, key 6 is lighted by a backlight color that is the brightest when compared to backlight colors of 2, 3, and 7 keys. Similarly, backlight color can be provided to 2, 3, and 7. As a result, the predicted keys are provided backlight with relative brightness, such that key having the highest normalized priority amongst the predicted keys is the brightest (amongst the predicted keys) and key having the lowest normalized priority amongst the predicted keys is the dullest (amongst the predicted keys). This makes the predicted keys easily accessible to the user of a device.

It will be appreciated that the emphasizing can be performed in various ways.

FIG. 5C is an illustration of the mobile device 502 when the second letter is typed. The key 6 is pressed once and the letter 'o' is displayed on the display area 506.

In one embodiment of the invention, the next set of possible letters that can follow the typed letter 'o' are predicted. The keys corresponding to the predicted letters can be emphasized by using the backlight. For example, the keys 2, 3, 4, 5, 6 and 8 are emphasized by using the backlight. The other keys that are not predicted in the sequence are turned off. For example, the keys 1, 7, 9, * 0, and # are turned off.

FIG. 5D is an illustration of the mobile device 502 when the third letter is typed. The key 6 is pressed once and the letter 'o' is displayed on the display area 506.

In one embodiment, the next set of possible letters that can follow the typed letter 'o' are predicted. The keys corresponding to the predicted letters can be emphasized by using backlight. Consider that there are only two sequences ('good' and 'goof') possible from the letters already provided as input ('goo'). As a result, key 3 is emphasized by using a backlight color. Other keys that are not predicted in the sequence are turned off. For example, the keys 1, 2, 4, 5, 6, 7, 8, 9, *, 0 and # are turned off. This makes key 3 easily accessible to the user.

FIG. 5E is an illustration of the mobile device 502 when key 3 has been selected and 'good' provided as a predicted word.

In one embodiment, a set of predicted words for a particular key can be provided to a user (one-by-one or as a list) by using a special key, for example, the '0' key. The user has a choice of selecting a word from the displayed alternatives (for example, 'goof'). In this embodiment, once a complete word is predicted, the special key (e.g. key 0) can be emphasized by using a backlight color.

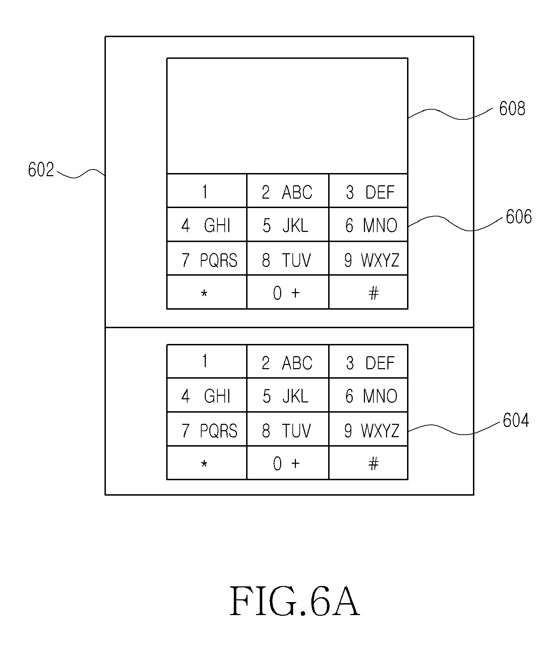

FIG. 6A is an illustration of a mobile device 602. The mobile device 602 includes a hardware keypad 604, a virtual keypad 606 and a display area 608. In one embodiment, the virtual keypad 606 illustrates the keys in the initial setup for messaging.

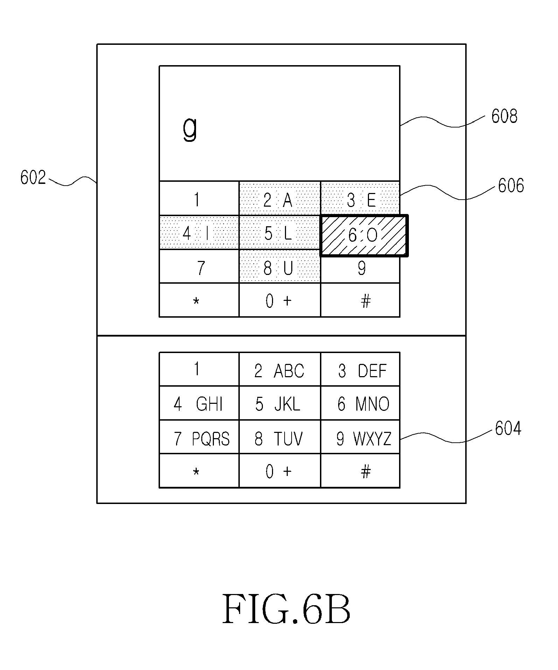

FIG. 6B is an illustration of the mobile device 602 when the first letter is typed. The key 4 is pressed once and the letter 'g' is displayed on the display area 608.

In one embodiment, the next set of possible letters that can follow the typed letter 'g' are predicted. The keys in the virtual keypad 606, corresponding to the predicted letters can be highlighted by using a backlight. For example, the keys 2, 3, 4, 5, 6 and 8 can be emphasized by using backlight. The other keys that are not predicted in the sequence are turned off. For example, the keys 1, 7, 9, *, 0 and # can be turned off. The most probable key, for example, key 6 can be made brighter and its size can also be increased.

It will be appreciated that the emphasizing can be performed in various other ways. Further, based on the order of the priority, size can be varied. For example, for the highest probable key (based on the priority and the distance from the last key pressed) the largest size can be allotted, for the other keys a comparatively smaller size can be selected based on the priority and the distance from the last key pressed.

In an embodiment, only the emphasized letters on the predicted keys in the next sequence are be displayed on the virtual keypad 606.

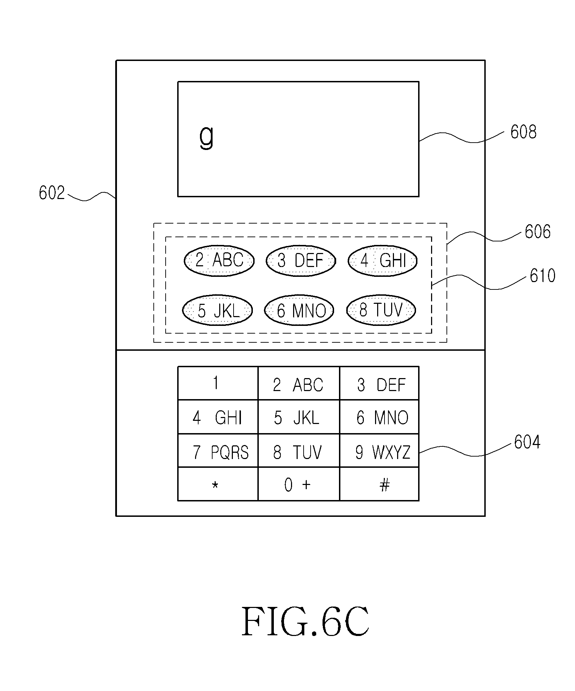

FIG. 6C is an illustration of a virtual keypad 606 in accordance with an embodiment of the present invention. Key 4 is pressed once and the letter 'g' is displayed on the textbox. A set of the next predicted keys 610 are then displayed at the bottom of the screen.

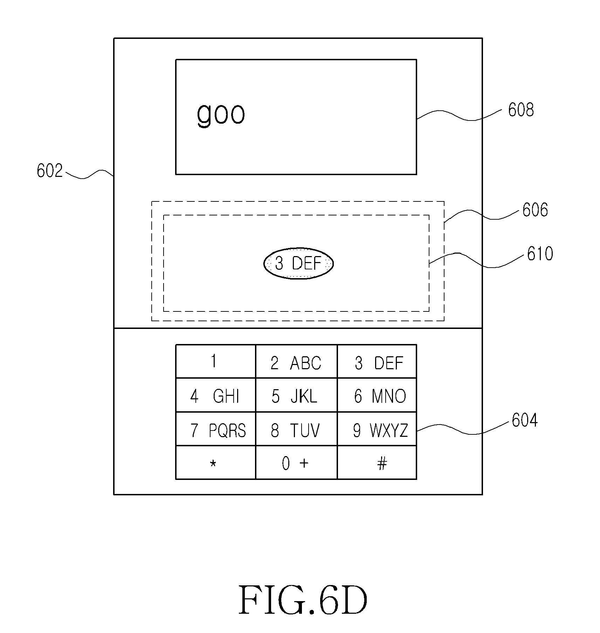

FIG. 6D is an illustration of the virtual keypad 606 after the letters 'g', 'o' and 'o' are typed. The next predicted key 610, key 3, is displayed at the bottom of the screen.

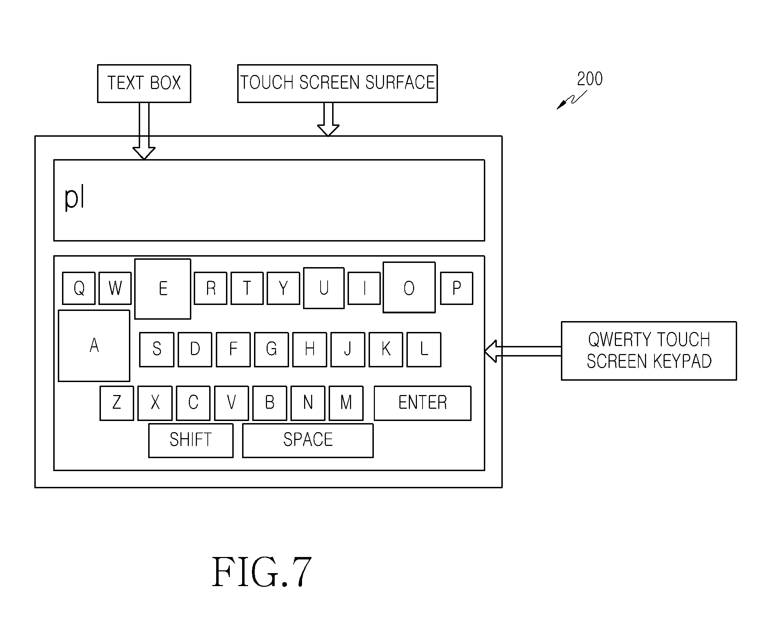

FIG. 7 depicts the emphasizing of objects, in accordance with an embodiment of the present invention. In this example, the user has already provided 'p' and 'l' as input characters/objects to the electronic device 200. As a result, 'pl' is displayed on the text box area. Accordingly, 'p' and 'l' are the input characters received from a user of the electronic device 200. Thereafter, the prediction engine 204 predicts characters 'a', 'o', 'e', and 'u' based on the input characters 'p' and 'l'. The characters can be predicted based on the words that can be formed by starting characters 'pl'. The processor 206 can calculate the distance of each predicted character 'a', 'o', 'e', and 'u' from the last predicted character 'l'. The processor 206 can also calculate the emphasizing priority of each of the predicted characters based on the priority of each predicted character and the distance of each predicted character from the last input character. The priority of the predicted character can be calculated based on the priority/usage of words that can be formed by using the input character and the predicted characters. In the current example, consider the priority of the predicted characters 'a', 'o', 'e', and 'u' is 6 units, 5 units, 3 units, and 1 unit, respectively. In addition, the distance of each predicted character 'a', 'o', 'e', and 'u' from the last input character 'l' is 8 units, 1 unit, 7 units, and 3 units, respectively. The emphasizing priority of 'a', 'o', 'e', and 'u' based on Equation (1) ($E(p_i) = C*D_i*P_i$) can be calculated as follows (considering C=1):

$E(a) = 8*6 = 48$;
$E(o) = 5*1 = 5$;
$E(u) = 3*1 = 3$; and
$E(e) = 7*3 = 21$.

As depicted, 'a' is emphasized the most and 'u' is emphasized the least. The characters can be emphasized based on one or more techniques described in the above embodiments. For example (as depicted in FIG. 7), the size of the area depicting character 'a' can be made the largest when compared to the area depicting 'o', 'e', and 'u'. In addition, character 'a' can be highlighted by using a color that is the brightest amongst colors used for highlighting "a', o', 'e', and 'u'.

While the embodiments of the present invention have been illustrated and described, it will be clear that the present invention and its advantages are not limited to these embodiments only. Numerous modifications, changes, variations, substitutions and equivalents will be apparent to those skilled in the art without departing from the spirit and scope of the present invention as described in the claims. Accordingly, the specification and figures are to be regarded as illustrative examples of the invention, rather than in restrictive sense.

**Claims**

1. A method for emphasizing objects in an electronic device, the method comprising:

    receiving an input from a user of the electronic device to select one or more objects;
    predicting one or more objects based on the selected object;
    calculating a distance of each predicted object from a last selected object; calculating an emphasizing priority of each predicted object based ona priority of the each predicted object and the distance of each predicted object from the last selected object; and
    emphasizing the predicted objects based on the emphasizing priority of the predicted objects.

2. The method of claim 1, wherein emphasizing the objects comprises at least one of highlighting the predicted objects based on the emphasizing priority, bolding the predicted objects based on the emphasizing priority, changing a size of the predicted objects based on the emphasizing priority, animating the predicted objects based on the emphasizing priority, changing an appearance of the predicted objects based on the emphasizing priority, flashing the predicted objects based on the emphasizing priority, blinking the predicted objects based on the emphasizing priority.

3. The method of claim 1 or 2, wherein the objects are at least one of characters and keys used for providing input to the electronic device.

4. The method of any preceding claim 1, wherein emphasizing the predicted objects comprises highlighting the predicted objects in different colors, and wherein a predicted object with a highest emphasizing priority is highlighted by using a brightest color amongst colors used for emphasizing the predicted objects, and a predicted object with a lowest emphasizing priority is highlighted by using a dullest color amongst colors used for emphasizing the predicted objects.

5. The method of claim any one of claims 1 to 3, wherein emphasizing the predicted objects comprises modifying a touch sensitivity of an area depicting the predicted objects based on the emphasizing priority, and wherein an area depicting a predicted object with a highest emphasizing priority is most sensitive to a touch amongst areas depicting the predicted objects, and an area depicting a predicted object with a lowest emphasizing priority is least sensitive to a touch amongst areas depicting the predicted objects.

6. The method of any one of claims 1 to 3, wherein emphasizing the predicted objects comprises modifying a size of the predicted objects based on the emphasizing priority, and wherein the size of a predicted object with a highest emphasizing priority is largest in size amongst the sizes of the predicted objects, and a size of a predicted object with a lowest emphasizing priority is the smallest in size amongst the sizes of the predicted objects.

7. The method of any one of claims 1 to 3, wherein emphasizing the predicted objects comprises modifying a layout of a virtual keypad to only display the predicted objects.

8. The method of any one of claims 1 to 3, wherein emphasizing the predicted objects comprises displaying the predicted objects in proximity to the last selected object based on the emphasizing priority of the predicted objects, and wherein a predicted object with a highest emphasizing priority is displayed in a closest proximity to the last selected object amongst the predicted objects, and a predicted object with a lowest emphasizing priority is displayed farthest from the last selected object amongst the predicted objects.

9. The method of any one of claims 1 to 3, wherein emphasizing the predicted objects comprises displaying the predicted objects with different fonts based on the emphasizing priority.

10. The method of any one of claims 1 to 3, wherein emphasizing the predicted objects comprises highlighting the predicted objects by using different backlight colors, and wherein a predicted object with a highest emphasizing priority is highlighted by using a brightest backlight color amongst the backlight colors used for emphasizing the predicted objects, and a predicted object with a lowest emphasizing priority is highlighted by using a dullest backlight color amongst the backlight colors used for emphasizing the predicted objects.

11. The method of any one of claims 1 to 3, wherein emphasizing the predicted objects comprises providing an animation for emphasizing the predicted objects.

12. The method of any preceding claim, wherein emphasizing the predicted objects is directly proportional or inversely proportional to the distance of each predicted object from the last selected object.

13. The method of any preceding claim, wherein emphasizing the predicted objects comprises emphasizing keys containing the predicted objects.

14. An electronic device (200) to implement the method of any preceding claim.

15. The electronic device (200) of claim 14, wherein the electronic device (200) comprises:

   an input module (202) adapted to receive an input from a user of the electronic device (200) to select one or more objects;
   a prediction engine (204) adapted to predict one or more objects based on the selected object;
   a processor (206) adapted to:

      calculate a distance of each predicted object from a last selected object;
      calculate an emphasizing priority of the each predicted object based on apriority of the each predicted object and the distance of each predicted object from the last selected object; and
      emphasize the predicted objects based on the emphasizing priority of the predicted objects.

FIG.1

200

ELECTRONIC DEVICE

202

INPUT MODULE

204

PREDICTION ENGINE

206

PROCESSOR

FIG.2

START ~302

↓

RECEIVE INPUT CHARACTERS ~304

↓

PREDICT ONE OR MORE CHARACTERS
BASED ON THE INPUT CHARACTERS ~306

↓

CALCULATE DISTANCE OF EACH
PREDICTED CHARACTER FROM A
LAST INPUT CHARACTER ~308

↓

CALCULATE EMPHASIZING PRIORITY OF
THE EACH PREDICTED CHARACTER BASED
ON PRIORITY OF THE EACH PREDICTED
CHARACTER AND THE DISTANCE
OF THE EACH PREDICTED CHARACTER
FROM THE LAST INPUT CHARACTER ~310

↓

EMPHASIZE THE PREDICTED CHARACTERS
BASED ON THE EMPHASIZING PRIORITY
OF THE PREDICTED CHARACTERS ~312

↓

END ~314

FIG.3

START ~402

↓

RECEIVE INPUT FROM A USER TO
SELECT OBJECTS ~404

↓

ASSIGN PRIORITY TO OBJECTS BASED ON
ONE OR MORE PARAMETERS ~406

↓

REORDER THE PRIORITY OF THE OBJECTS
BASED ON DISTANCE OF THE OBJECTS
FROM LAST OBJECT SELECTED BY THE USER ~408

↓

EMPHASIZE THE OBJECTS BASED
ON REORDERED PRIORITY ~410

↓

END ~412

FIG.4

502

506

| 1 | 2 ABC | 3 DEF |
| 4 GHI | 5 JKL | 6 MNO |
| 7 PQRS | 8 TUV | 9 WXYZ |
| * | 0 + | # |

504

FIG.5A

g

502

506

| 1 | 2 ABC | 3 DEF |
|---|---|---|
| 4 GHI | 5 JKL | 6 MNO |
| 7 PQRS | 8 TUV | 9 WXYZ |
| * | 0 + | # |

504

FIG.5B

go _____ 502

_____ 506

| 1 | 2 ABC | 3 DEF |
| 4 GHI | 5 JKL | 6 MNO |
| 7 PQRS | 8 TUV | 9 WXYZ |
| * | 0 + | # |

_____ 504

# FIG.5C

goo

502

506

| 1 | 2 ABC | 3 DEF |
|---|---|---|
| 4 GHI | 5 JKL | 6 MNO |
| 7 PQRS | 8 TUV | 9 WXYZ |
| * | 0 + | # |

504

FIG.5D

good

502

506

| 1 | 2 ABC | 3 DEF |
|---|---|---|
| 4 GHI | 5 JKL | 6 MNO |
| 7 PQRS | 8 TUV | 9 WXYZ |
| * | 0 + | # |

504

# FIG.5E

602

608

| 1 | 2  ABC | 3  DEF |
|---|---|---|
| 4  GHI | 5  JKL | 6  MNO |
| 7  PQRS | 8  TUV | 9  WXYZ |
| * | 0  + | # |

606

| 1 | 2  ABC | 3  DEF |
|---|---|---|
| 4  GHI | 5  JKL | 6  MNO |
| 7  PQRS | 8  TUV | 9  WXYZ |
| * | 0  + | # |

604

# FIG.6A

g

| | | |
|---|---|---|
| 1 | 2 A | 3 E |
| 4 I | 5 L | 6 O |
| 7 | 8 U | 9 |
| * | 0 + | # |

608

606

602

| 1 | 2 ABC | 3 DEF |
|---|---|---|
| 4 GHI | 5 JKL | 6 MNO |
| 7 PQRS | 8 TUV | 9 WXYZ |
| * | 0 + | # |

604

FIG.6B

g

608

602

606

610

| 2 ABC | 3 DEF | 4 GHI |
| 5 JKL | 6 MNO | 8 TUV |

| 1 | 2 ABC | 3 DEF |
|---|---|---|
| 4 GHI | 5 JKL | 6 MNO |
| 7 PQRS | 8 TUV | 9 WXYZ |
| * | 0 + | # |

604

# FIG.6C

goo

608

602

606

610

3 DEF

| 1 | 2 ABC | 3 DEF |
|---|---|---|
| 4 GHI | 5 JKL | 6 MNO |
| 7 PQRS | 8 TUV | 9 WXYZ |
| * | 0 + | # |

604

FIG.6D

FIG.7

Europäisches
Patentamt

European
Patent Office

Office européen
des brevets

# EUROPEAN SEARCH REPORT

Application Number

EP 09 16 6763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 963 671 A (COMERFORD LIAM DAVID [US] ET AL) 5 October 1999 (1999-10-05) | 1-4,6-15 | INV. G06F3/023 G06F3/048 H04M1/22 |
| A | combined with US2005/052406 * column 1, line 14 - line 16 * * column 1, line 65 - column 2, line 31 * * column 3, line 16 - column 5, line 16 * * column 7, line 53 - column 9, line 20 * * column 10, line 44 - column 13, line 12 * * column 15, line 15 - column 16, line 37 * * figures 2,3,7,8A * | 5 | |
| Y | US 2005/052406 A1 (STEPHANICK JAMES [US] ET AL) 10 March 2005 (2005-03-10) combined with US5963671 * paragraph [0061] * * paragraph [0094] * | 1-4,6-15 | |
| Y | US 2005/071778 A1 (TOKKONEN TIMO [FI]) 31 March 2005 (2005-03-31) combined with WO2004/092906 * paragraph [0001] * * paragraph [0009] - paragraph [0012] * * paragraph [0016] - paragraph [0017] * * paragraph [0028] - paragraph [0036] * * figure 4 * | 1-3,6, 11-15 | TECHNICAL FIELDS SEARCHED (IPC) G06F H04M |

-/--

The present search report has been drawn up for all claims

| Place of search | Date of completion of the search | Examiner |
|---|---|---|
| Munich | 12 November 2009 | Banerjea, Robin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 16 6763

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/092906 A (AMERICA ONLINE INC [US]) 28 October 2004 (2004-10-28) combined with US2005/071778 <br> * page 3, line 12 - line 21 * <br> * page 8, line 16 - line 21 * <br> * page 10, line 6 - line 12 * <br> * page 11, line 4 - page 12, line 2 * <br> * page 13, line 7 - line 13 * <br> * page 16, line 1 - line 4 * <br> * page 17, line 18 * <br> * page 20, line 3 - line 21 * <br> * page 21, line 5 - line 9 * <br> * figure 2 * <br> ----- | 1-3,6, 11-15 | |
| | | | TECHNICAL FIELDS SEARCHED (IPC) |

The present search report has been drawn up for all claims

| Place of search | Date of completion of the search | Examiner |
|---|---|---|
| Munich | 12 November 2009 | Banerjea, Robin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 6763

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2009

| Patent document cited in search report | | Publication date | Patent family member(s) | | Publication date |
|---|---|---|---|---|---|
| US 5963671 | A | 05-10-1999 | NONE | | |
| US 2005052406 | A1 | 10-03-2005 | NONE | | |
| US 2005071778 | A1 | 31-03-2005 | NONE | | |
| WO 2004092906 | A | 28-10-2004 | CA | 2521362 A1 | 28-10-2004 |
| | | | CN | 1624641 A | 08-06-2005 |
| | | | EP | 1629345 A2 | 01-03-2006 |
| | | | US | 2009213134 A1 | 27-08-2009 |

EPO FORM P0459

For more details about this annex : see Official Journal of the European Patent Office, No. 12/82